Europäisches Patentamt

European Patent Office

Office européen des brevets

(19)

(11) **EP 1 331 823 A2**

(12) **EUROPEAN PATENT APPLICATION**

(43) Date of publication:
**30.07.2003 Bulletin 2003/31**

(51) Int Cl.$^7$: **H04N 7/24**

(21) Application number: **03250081.1**

(22) Date of filing: **08.01.2003**

(84) Designated Contracting States:
**AT BE BG CH CY CZ DE DK EE ES FI FR GB GR
HU IE IT LI LU MC NL PT SE SI SK TR**
Designated Extension States:
**AL LT LV MK RO**

(30) Priority: **10.01.2002 JP 2002003528**

(71) Applicant: **CANON KABUSHIKI KAISHA
Ohta-ku Tokyo 146-8501 (JP)**

(72) Inventor: **Yoshigahara, Noriyuki
c/o Canon Kabushiki Kaisha
Ohta-ku, Tokyo (JP)**

(74) Representative:
**Beresford, Keith Denis Lewis et al
BERESFORD & Co.
2-5 Warwick Court,
High Holborn
London WC1R 5DH (GB)**

(54) **Receiving apparatus**

(57)    A receiving apparatus for receiving image data from a server, which changes the order of frames of moving image data coded in the MPEG format or the like, and transmits second image data formed from only inter-frame coded frames after transmission of first image data formed from only intra-frame coded frames. The receiving apparatus initiates decoding the first image data formed from only the intra-frame coded frames when receiving the first image data. Then, when receiving the second image data, the receiving apparatus initiates decoding the coded data formed from the intra-frame coded frames and inter-frame coded frames obtained from the first image data and the second image data.

## FIG. 1

## Description

BACKGROUND OF THE INVENTION

Field of the Invention

This invention relates to a receiving apparatus and, more particularly, to an apparatus for receiving and decoding coded moving image data.

Related Background Art

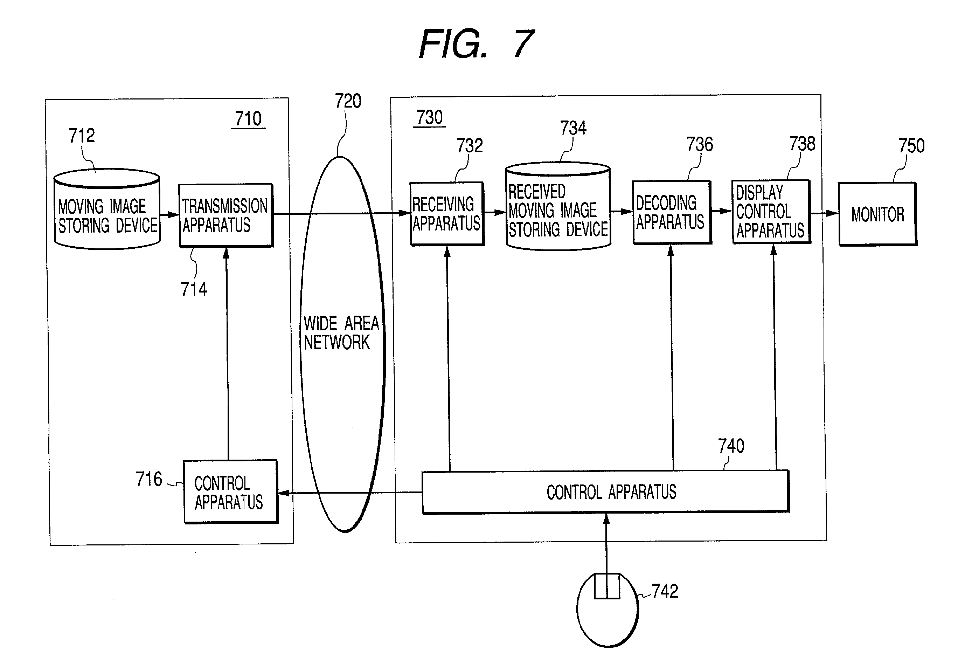

Fig. 7 shows a conventional apparatus that connects through communication means to a server storing coded moving data and reproduces a moving image.

A server 710 stores coded moving image information in a moving image storing device 712. A client terminal 730 can connect to the server 710 through a wide area network 720 to request the server 710 to transmit a moving image. When the server 710 receives a moving image transmission command from the client terminal 730, a transmission apparatus 714 reads out requested coded moving image information from the moving image storing device 712 under instructions from a control apparatus 716, and transmits the read-out information to the client terminal 730 through the wide area network 720.

The client terminal 730 is equipped with a receiving apparatus 732, a received moving image storing device 734, a decoding apparatus 736, a display control apparatus 738, a control apparatus 740, and an operation input device 742 such as a mouse. When a user operates the operation input device 742 to instruct the control apparatus 740 to reproduce a moving image, the control apparatus 740 instructs the control apparatus 716 of the server 710 to transmit the moving image through the wide area network 720.

Upon receipt of coded moving image information from the server 710, the receiving apparatus 732 stores the information in the received moving image storing device 734. Then upon completion of receiving the specified moving image, the decoding apparatus 736 decodes the coded moving image information received, and the display control apparatus 738 outputs an image signal decoded by the decoding apparatus 736 to a monitor 750. Thus the received moving image is displayed.

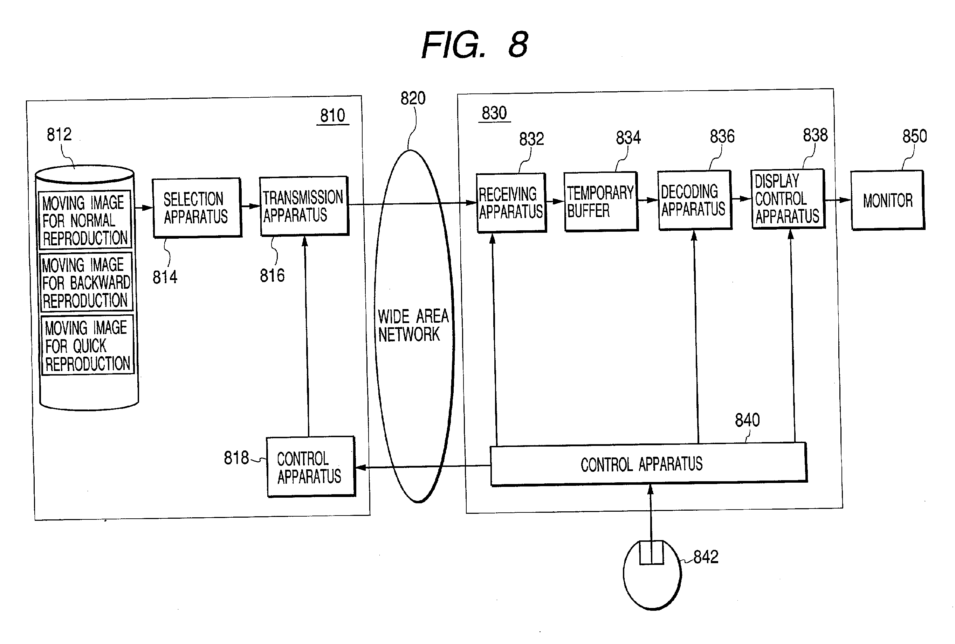

Fig. 8 is a schematic block diagram of the second conventional example. The details of this are described in Japanese Patent Application Laid-Open No. 2000-125260.

A server 810 stores moving image information in a moving image storing device 812 in multiple formats different from one another. A client terminal 830 can connect to the server 810 through a wide area network 820 to request the server 810 to transmit a moving image. Upon receipt of a moving image transmission command from the client terminal 830, a control apparatus 818 of the server 810 controls a selection apparatus 814 to read out, from the moving image storing device 812, coded information of the prescribed format of a moving image specified by the client terminal 830, and output the read-out coded information to a transmission apparatus 816. The transmission apparatus 816 transmits the coded moving image information from the selection apparatus 814 to the client terminal 830 through the wide area network 820.

The client terminal 830 is equipped with a receiving apparatus 832, a temporary buffer 834, a decoding apparatus 836, a display control apparatus 838, a control apparatus 840, and an operation input device 842 such as a mouse. When a user operates the operation input device 842 to instruct the control apparatus 840 to reproduce a moving image, the control apparatus 840 instructs the control apparatus 818 of the server 810 to transmit the moving image through the wide area network 820.

The receiving apparatus 832 receives the coded moving image information from the server 810. The received moving image information is outputted to the decoding apparatus 836 through the temporary buffer 834. Then, when the user operates the operation input device 842 to instruct the control apparatus 840 to perform reproduction, the decoding apparatus 836 decodes the received coded moving image information under instructions from the control apparatus 840, and outputs the same to the display control apparatus 838. The display control apparatus 838 outputs an image signal decoded by the decoding apparatus 836 to a monitor 850. Thus the received moving image is displayed.

The conventional example shown in Fig. 7, however, cannot initiate reproduction until all moving image data is received. On the other hand, the conventional example shown in Fig. 8 has a problem of being incapable of providing comfortable viewing when it takes more time to reproduce all moving image data than to reproduce the original moving image data due to the congestion of the wide area network 820 or the like. It also has the same problem when two kinds of moving image data respectively for quick-forward reproduction and normal reproduction are prepared, and when moving image data for normal reproduction is to be received for normal reproduction after moving image data for quick-forward reproduction has been received and reproduced. This is because quick-forward reproduction becomes incapable of providing an overview of the moving image data for normal reproduction by the quick-forward reproduction immediately after initiation of transmission of moving image data.

SUMMARY OF THE INVENTION

It is a concern of the invention to solve the aforementioned problems.

It is anotherconcern of the invention to make moving image information viewable comfortably when moving image information transmitted from an external transmission apparatus is to be received.

According to one aspect of the invention, there is provided a receiving apparatus comprising:

receiving means for receiving first image data and second image data from a transmission apparatus which extracts a frame of coded image data from a string of coded moving image data at every predetermined interval to create the first image data, creates the second image data from frames of coded image data other than the extracted frames, and transmits the second image data after transmission of the first image data;

decoding means for decoding the image data received by the receiving means;

sorting means for sorting a plurality of frames of the first image data and the second image data received by the receiving means to obtain the string of coded moving image data; and

control means for controlling the decoding means to decode the string of coded moving image data obtained by the sorting means.

The other advantages and features will become more apparent from the following detailed description of the preferred embodiments made with reference to the accompanying drawings.

BRIEF DESCRIPTION OF THE DRAWINGS

Fig. 1 is a block diagram showing the schematic configuration of a first embodiment of the invention.

Fig. 2 is an illustration of frame sorting performed by a sorting apparatus 16.

Fig. 3 is an illustration of reproduction operation in the first embodiment of the invention.

Fig. 4 is a block diagram showing the schematic configuration of a second embodiment of the invention.

Fig. 5 is an illustration of an example of operation of the second embodiment.

Fig. 6 is an illustration of another example of operation of the second embodiment.

Fig. 7 is a block diagram showing the schematic configuration of a conventional example.

Fig. 8 is a block diagram showing the schematic configuration of another conventional example.

DETAILED DESCRIPTION OF THE PREFERRED EMBODIMENTS

Embodiments of the invention will now be described in detail with reference to the accompanying drawings.

First Embodiment

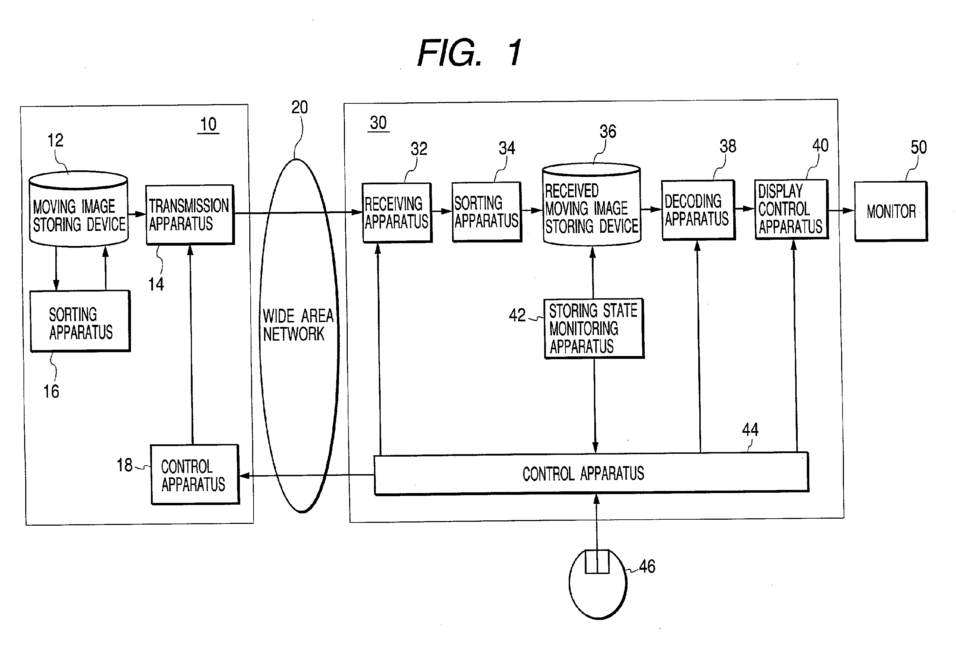

Fig. 1 is a block diagram showing the schematic configuration of a receiving system of the first embodiment of the invention.

In Fig. 1, a moving image storing device 12 in a server 10 stores coded moving image information. A sorting apparatus 16 sorts frames of coded moving image information stored in the moving image storing device 12 in a predetermined order. A client terminal 30 can connect to the server 10 through a wide area network 20 to request the server 10 to transmit a moving image. Upon receipt of a moving image transmission command from the client terminal 30, a control apparatus 18 of the server 10 controls a transmission apparatus 14 to read out requested coded moving image information in sequence from the moving image storing device 12 and transmit the same to the client terminal 30 through the wide area network 20.

The client terminal 30 is equipped with a receiving apparatus 32, a sorting apparatus 34, a received moving image storing apparatus 36, a decoding apparatus 38, a display control apparatus 40, a storing state monitoring apparatus 42, a control apparatus 44, and an operation input device 46 such as a mouse. When a user operates the operation input device 46 to instruct the control apparatus 44 to reproduce a moving image, the control apparatus 44 instructs the control apparatus 18 of the server 10 to transmit the moving image through the wide area network 20.

The receiving apparatus 32 receives the coded moving image information from the server 10 and outputs the same to the sorting apparatus 34. The sorting apparatus 34 refers to DTS/PTS of the coded moving image information received at the receiving apparatus 32 to sort them in the order in which a stream of original frames for normal reproduction appear, and write the sorted moving image information into the moving image storing device 36. The moving image information transmitted in this embodiment has been coded in the MPEG-2 format as described later. DTS is a time stamp denoting the timing of decoding multiple packets of moving image data constituting the MPEG-2 coded data string. PTS is a time stamp denoting the timing of displaying the decoded moving image information. Therefore, DTS/PTS checking makes it possible to recognize the sequence of decoding or displaying each frame.

The storing state monitoring apparatus 42 monitors the storing state of moving image information stored in the moving image storing device 36, and supplies monitoring results to the control apparatus 44. The control apparatus 44 decides reproducing frames in view of the monitoring results, and gives the decided reproducing frames to the decoding apparatus 38. The decoding apparatus 38 reads out image data of frames instructed by the control apparatus 44 from the information stored in the moving image storing device 36, decodes the read-out image data, and outputs the decoded image data to the display control apparatus 40. The display control apparatus 40 outputs an image signal decoded by the decoding apparatus 38 to a monitor 50. Thus the received moving image is displayed.

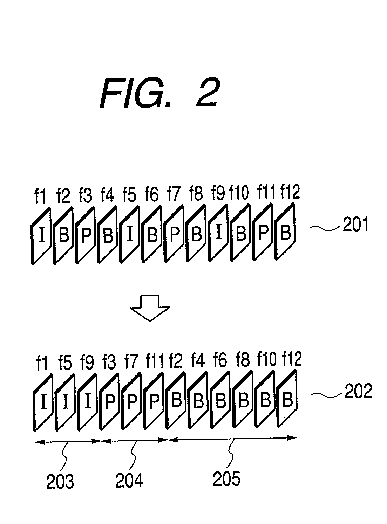

Fig. 2 shows the state of a stream of original data for normal reproduction stored in the moving image storing device 12.

As stated above, the moving image storing device 12 stores moving image signals coded in the MPEG-2 format. In the MPEG format, moving image data is coded by intra-frame coding and inter-frame coding. In other words, I-frame coded (by intra-frame coding) using only image signals in the same frame, P-frame obtained by coding differences from image data of I-frame (forward predictive coding), and B-frame obtained by coding difference from the previous and following I- or P-frame (bi-directional predictive coding) are multiplexed in a predetermined order to create a string of coded data.

The state of the string of moving image data thus coded is shown at 201 in Fig. 2, illustrating 12 frames from frame f1 to frame f12 with I-, B-, and P-frames multiplexed in the order shown at 201.

The sorting apparatus 16 sorts in the order shown at 202, the frames in the string of moving image data coded in the order shown at 201.

In other words, the state at 202 is such that only the I-frames are extracted to constitute an I-frame data string 203, only the P-frames are extracted to constitute a P-frame data string 204, and only the B-frames are extracted to constitute a B-frame data string 205. Then, the I-frame data string 203, the P-frame data string 204, and the B-frame data string 205 are transmitted in this order as shown at 202.

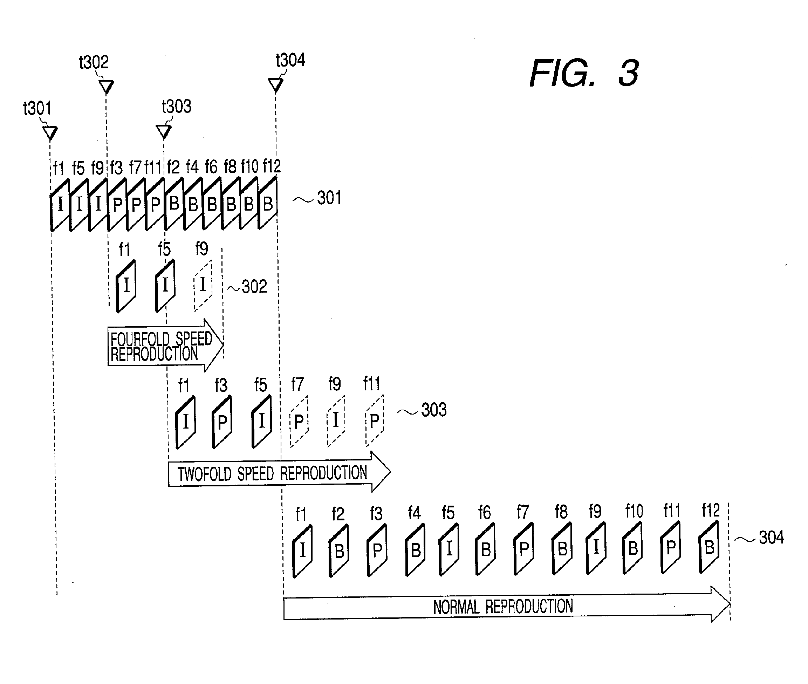

Referring next to Fig. 3, the reproduction operation of the embodiment shown in Fig. 1 will be described.

The receiving apparatus 32 receives the coded moving image data string 202 of Fig. 2, and outputs the same to the sorting apparatus 34. To be more specific, the receiving apparatus 32 first receives the I-frame data string 203 formed from only the I-frames, then the P-frame data string 204 and the B-frame data string 205. The sorting apparatus 34 writes each of the received data strings into a predetermined address of the moving image storing device 36.

The storing state monitoring apparatus 42 checks the state of moving image data stored in the moving image storing device 36 in response to the start of the receiving operation, confirms that the I-frame data string 203 has been stored in the moving image storing device 36, and notifies the control apparatus 44 of it. The control apparatus 44 gives the decoding apparatus 38 three I-frame data addresses and instructs the decoding apparatus 38 to read out and decode the three I-frames in the I-frame data string 203 stored in the moving image storing device 36. In response to the instructions, the decoding apparatus 38 reads out only the I-frame data from the moving image storing device 36 to initiate decoding.

If the string of original coded moving image data is constituted as shown at 201 in Fig. 2, the I-frame data is multiplexed every four frames. Therefore, only the I-frames can be extracted and decoded to obtain an image for four-fold speed reproduction of the moving image data string 201.

Similarly, when the P-frame data string 204 is stored in the moving image storing device 36, the control apparatus 44 halts the four-fold speed reproduction of the I-frame data. Then the control apparatus 44 outputs I- and P-frame data addresses to the decoding apparatus 38 so that the decoding apparatus 38 will newly read out and decode the I-frame data and P-frame data in the original order. In response to the instructions, the decoding apparatus 38 reads out the I-frame data and P-frame data from the moving image storing device 36 to initiate decoding.

If the string of original coded moving image data is constituted as shown at 201, the I- and P-frames are multiplexed one after the other. Therefore, the I- and P-frames can be decoded to obtain an image for two-fold speed reproduction of the original moving image data string 201.

After that, when the B-frame data string is stored in the moving image storing device 36, the control apparatus 44 halts the two-fold reproduction of the I- and P-frame data. Since the I-frame data 203, the P-frame data 204, and the B-frame data 205 have all been received and stored up to this time, the control apparatus 44 controls the decoding apparatus 38 to newly read out and decode the I-, P-, and B-frame data in the original order shown at 201. In response to the instructions, the decoding apparatus 38 reads out each frame data from the moving image storing device 36 to initiate decoding.

Thus the reproduction of an image at normal speed can be initiated at that point in time when the B-frame data string 205 is completely received.

Fig. 3 shows a picture of the aforementioned processing.

In Fig. 3, 301 indicates the state of a coded data string received at the receiving apparatus 32, and corresponds to 202 in Fig. 2. Here, receiving is initiated at t301, and after completion of storing the I-frame data string 203 at t302, each frame data is decoded in an order shown at 302 and four-fold speed reproduction is initiated. After that, after completion of storing the P-frame data string 204 at t303, each frame data is decoded in an order shown at 303 and two-fold speed reproduction is initiated. Then, after completion of storing all the frame data at t304, each frame data is decoded in the original order as shown at 304 and normal reproduction is initiated.

As described above, according to the embodiment, the string of coded moving image data consisting of the I-, P-, and B-frames is sorted so that the I-frame data string, the P-frame data string, and the B-frame data string will be transmitted from the server in this order. On the other hand, since decoding is initiated in that point in time when the receiving apparatus receives the I-frame data string, the reproduction of a moving image can be initiated before completion of receiving all the data in the original coded data string.

It allows the user to confirm the reproduced image before completion of receiving all the coded data.

Second Embodiment

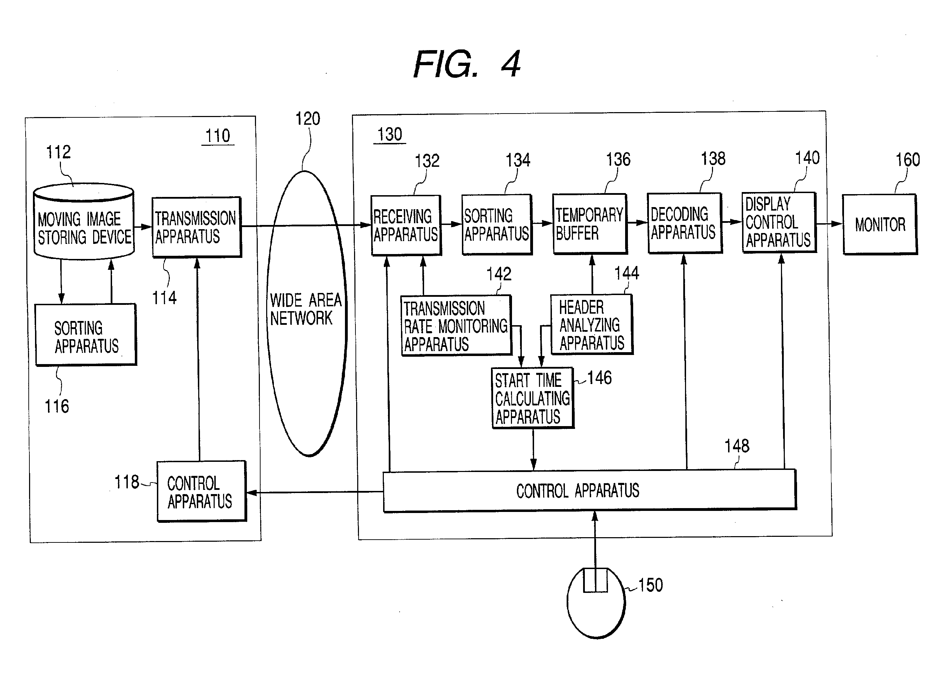

Fig. 4 is a block diagram showing the schematic configuration of a receiving system practiced as the second embodiment of the invention.

In a server 110, a moving image storing device 112 stores coded moving image information. A sorting apparatus 116 sorts frames of the coded moving image information stored in the moving image storing device 112 in a predetermined order in the same manner as the sorting apparatus 16. A client terminal 130 can connect to the server 110 through a wide area network 120 to request the server 110 to transmit a moving image. Upon receipt of a moving image transmission command from the client terminal 130, a control apparatus 118 of the server 110 controls a transmission apparatus 114 to read out requested coded moving image information in sequence from the moving image storing device 112 and transmit the same to the client terminal 130 through the wide area network 120.

The client terminal 130 is equipped with a receiving apparatus 132, a sorting apparatus 134, a temporary buffer 136, a decoding apparatus 138, a display control apparatus 140, a transmission rate monitoring apparatus 142, a header analyzing apparatus 144, a start time calculating apparatus 146, a control apparatus 148, and an operation input device 150 such as a mouse.

When a user operates the operation input device 150 to instruct the control apparatus 148 to reproduce a moving image, the control apparatus 148 instructs the control apparatus 118 of the server 110 to transmit the moving image through the wide area network 120.

The receiving apparatus 132 receives the coded moving image information from the server 110. The sorting apparatus 134 refers to DTS/PTS of the coded moving image information received at the receiving apparatus 132 to sort them in the order in which a stream of original frames for normal reproduction appear, and write the sorted moving image information into the temporary buffer 136. The temporary buffer 136 has the capacity capable of storing all the I-frame data 203 and the P-frame data 204 shown in Fig. 2.

The transmission rate monitoring apparatus 142 monitors the transmission rate from the server 110 to the client terminal 130. The header analyzing apparatus 144 analyzes headers of the data stored in the temporary buffer 136 to calculate the entire reproduction time in the normal reproduction. The start time calculating apparatus 146 calculates times capable of starting four-fold speed reproduction of only the aforementioned I-frame data, two-fold speed reproduction of the I- and P-frame data, and reproduction at the time of normal reproduction respectively, based on the information from the transmission rate monitoring apparatus 142 and the header analyzing apparatus 144. Then the start time calculating apparatus 146 supplies the calculated times to the control apparatus 148.

The control apparatus 148 instructs the decoding apparatus 138 to decode corresponding frame data at the times corresponding to the reproduction start times from the start time calculating apparatus 146. The decoding apparatus 138 reads out frame data specified by the control apparatus 148 from the temporary buffer 136, and reproduces and outputs the same to the display control apparatus 140. The display control apparatus 140 outputs an image signal decoded by the decoding apparatus 138 to a monitor 160. Thus the received moving image is displayed.

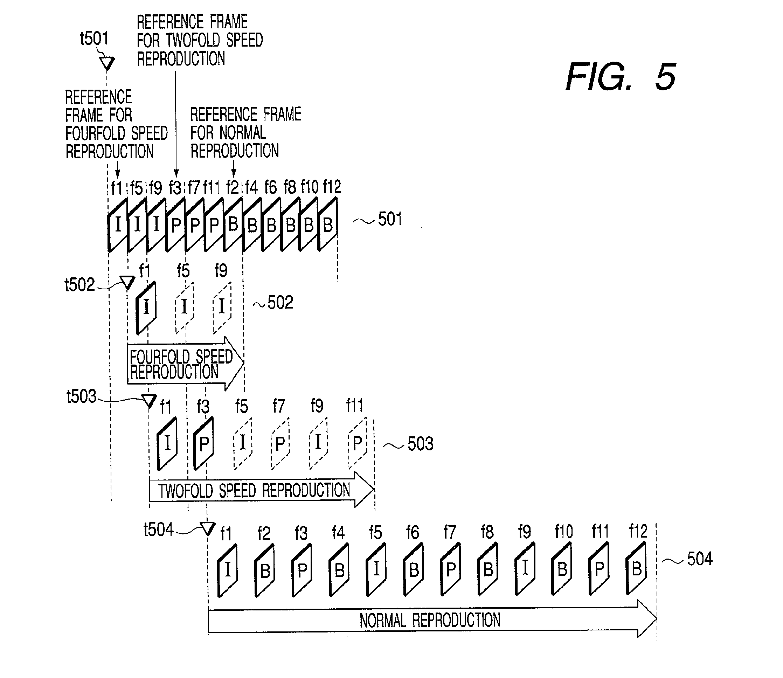

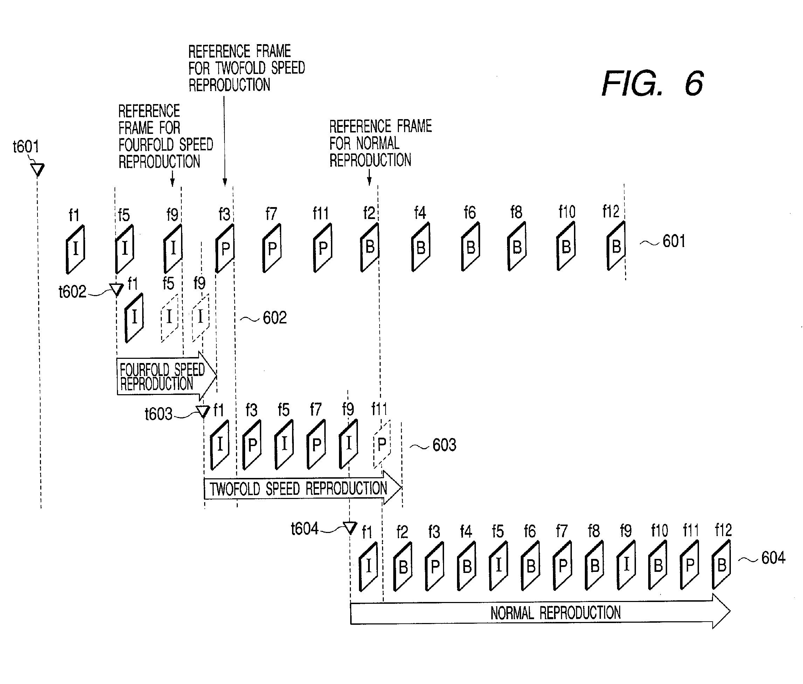

Referring next to Figs. 5 and 6, the reproduction operation of the receiving apparatus 132 will be described.

In this embodiment, the receiving apparatus 132 also receives data 202 in Fig. 2. When the receiving apparatus 132 receives data, the reproduction start time calculating apparatus 146 first determines transfer time expected to receive completely all the data in the I-frame data string 203 from the transmission rate from the transmission rate monitoring apparatus 142. The reproduction start time calculating apparatus 146 then determines reproduction time in the N-fold speed reproduction (for example, four-fold speed reproduction when the I-frame data string 203 is received, or two-fold speed reproduction when the P-frame data string is received) from the reproduction time of normal reproduction sent from the header analyzing apparatus 144.

Using the determined time information, reference frames for deciding the reproduction start times are decided as shown in Figs. 5 and 6 according to the following criteria:

When (expected transfer time of data string for N-fold speed reproduction) < (N-fold speed reproduction time), the first frame of the data string for N-fold speed reproduction is set as the reference frame, and when (expected transfer time of data string for N-fold speed reproduction) > (N-fold speed reproduction time), the last frame of the data string for N-fold speed reproduction is set as the reference frame.

The reproduction start times are then decided according to the following equation in view of expected times of arrival of the reference frames thus decided, the reproduction times before the reference frames, and decoding-start delay times, respectively:

N-fold speed reproduction start time

= (expected time of arrival of reference frame)

- (N-fold speed reproduction time before reference

frame)

- (decoding-start delay time),
  where the decoding-start delay time is a delay time interval from when the decoding apparatus is instructed to initiate decoding each data string until it actually initiates decoding.

The reproduction operation using the time capable of initiating each N-fold speed reproduction thus calculated by the reproduction start time calculating apparatus 146 will be described using Figs. 5 and 6.

Fig. 5 is an illustration showing reproduction processing when the transmission rate from the server 110 is relatively fast.

In Fig. 5, a data string 501 transmitted from the server 110 is the same as the data string 202 in Fig. 2. As also stated above, f1 is a reference frame for four-fold speed reproduction, f3 is a reference frame for two-fold speed reproduction, and f2 is a reference frame for normal reproduction.

Then, as a result of calculations of reference times for starting reproduction as mentioned above, t502, t503, and t504 are set as reference times for four-fold speed reproduction, two-fold speed reproduction, and normal reproduction, respectively. After initiation of receiving the data string at t501, decoding of the I-frame data is initiated at t502 to initiate four-fold speed reproduction 502. During the four-fold reproduction, decoding of the I- and P-frame data is initiated at t503 to initiate two-fold speed reproduction 503. During the two-fold speed reproduction, decoding of all the data is initiated at t504 to initiate normal reproduction.

Fig. 6 is an illustration showing reproduction processing when the transmission rate from the server 110 is relatively slow.

In Fig. 6, a data string 601 transmitted from the server 110 is the same as the data string 202 in Fig. 2. As also stated above, f9 is a reference frame for four-fold speed reproduction, f3 is a reference frame for two-fold speed reproduction, and f2 is a reference frame for normal reproduction.

Then, as a result of calculations of reference times for starting reproduction as mentioned above, t602, t603, and t604 are set as reference times for four-fold speed reproduction, two-fold speed reproduction, and normal reproduction, respectively. After initiation of receiving the data string at t601, decoding of the I-frame data is initiated at t602 to initiate four-fold speed reproduction 602. During the four-fold reproduction, decoding of the I- and P-frame data is initiated at t603 to initiate two-fold speed reproduction 603. During the two-fold speed reproduction, decoding of all the data is initiated at t604 to initiate normal reproduction.

As described above, the embodiment is such that, when image data transmitted after sorting frames of MPEG coded moving image data in such a manner that the I-frame data string, the P-frame data string, and the B-frame data string appear in this order is received and decoded, the timing of decoding the I-frame data to initiate four-fold speed reproduction, the timing of decoding the I- and P-frame data to initiate two-fold speed reproduction, and the timing of decoding all the frame data to initiate normal reproduction are decided based on the transmission rate, the reproduction time of each coded data string, and the like. It makes it possible to initiate reproduction faster.

The above embodiments illustrates the case where coded moving image data formed from 12 frames such as f1 to f12 shown in Fig. 2 is transmitted and received, but the invention is applicable to a case where moving image data formed from more frames is transmitted and received.

Further, in the moving image data string of Fig. 2, each frame is coded using intra-frame coding, bi-directional prediction coding, forward prediction coding, bi-directional prediction coding, and intra-frame coding in this order, and this coding operation is repeated. However, it is also possible to perform these types of encoding, called intra-frame coding, forward predictive coding, and bi-directional coding, in any other predetermined order.

For example, if intra-frame coding is performed every 15 frames, only I-frame data appearing every 15 frames is picked up to create and transmit an I-frame data string. In this case, the receiving apparatus decodes the I-frame data string, thus obtaining a reproduced image 15 times faster than normal reproduction.

Many widely different embodiments of the present invention may be constructed without departing from the spirit and scope of the present invention. It should be understood that the present invention is not limited to the specific embodiments described in the specification, except as defined in the appended claims.

**Claims**

1. A receiving apparatus comprising:

   receiving means for receiving first image data and second image data from a transmission apparatus which extracts a frame of coded image data from a string of coded moving image data at every predetermined interval to create the first image data, creates the second image data from frames of coded image data other than the extracted frames, and transmits the second image data after transmission of the first image data;
   decoding means for decoding the image data received by said receiving means;

sorting means for sorting a plurality of frames of the first image data and the second image data received by said receiving means to obtain the string of coded moving image data; and control means for controlling said decoding means to decode the string of coded moving image data obtained by said sorting means.

**2.** An apparatus according to claim 1, wherein said control means further controls said decoding means to initiate decoding the first image data when said receiving means receives the first image data.

**3.** An apparatus according to claim 2, wherein said control means further controls said decoding means to halt decoding processing for the first image data when said receiving means receives the second image data, and initiate decoding the string of coded moving image data obtained by said sorting means.

**4.** An apparatus according to claim 3, wherein said control means decides decoding start timing of the string of coded moving image data based on the transmission rate of the image data received by said receiving means and the reproduction time of the string of coded moving image data.

**5.** An apparatus according to claim 1, wherein the string of coded moving image data is coded selectively using intra-frame coding and inter-frame coding such that the first image data is made up of intra-coded image data and the second image data is made up of inter-coded image data.

**6.** An apparatus according to claim 5, wherein the string of coded moving image data is coded in the MPEG format such that the first image data is formed from I-frames and the second image data is formed from P- and B-frames.

**7.** A receiving apparatus comprising:

receiving means for receiving first image data and second image data from a transmission apparatus which sorts a plurality of frames in a string of coded moving image data formed by multiplexing an intra-picture coded first frame and an inter-picture coded second frame in a predetermined order, and transmits the second image data formed from the second frames after transmission of the first image data formed from the first frames;

decoding means for decoding the image data received by said receiving means;

sorting means for sorting a plurality of frames of the first image data and the second image data received by said receiving means to obtain the string of coded moving image data; and control means for controlling said decoding means to initiate decoding the first image data when said receiving means receives the first image data, and initiate decoding the string of coded moving image data obtained by said sorting means when said receiving means receives the second image data.

**8.** A receiving apparatus comprising:

receiving means for receiving first image data, second image data, and third image data from a transmission apparatus which sorts a plurality of frames in a string of coded moving image data formed by multiplexing an intra-picture coded first frame, a forward prediction coded second frame, and a bi-directional prediction coded third frame in a predetermined order, and transmits the second image data formed from the second frames after transmission of the first image data formed from the first frames and transmits the third image data formed from the third frames after transmission of the second image data;

decoding means for decoding the image data received by said receiving means;

sorting means for sorting a plurality of frames of the first image data, the second image data, and the third image data received by said receiving means to obtain a first string of coded image data formed from the first frames and the second frames and a second string of coded image data formed from the first frames, the second frames, and the third frames; and control means for controlling said decoding means to initiate decoding the first image data when said receiving means receives the first image data, initiate decoding the first string of coded image data obtained by said sorting means when said receiving means receives the second image data, and initiate decoding the second string of coded image data obtained by said sorting means when said receiving means receives the third image data.

**9.** An image processing system comprising:

a transmission apparatus which sorts a plurality of frames in a string of coded moving image data formed by multiplexing intra-picture coded first frames and inter-picture coded second frames in a predetermined order, and transmits second image data formed from the second frames after transmission of first image data formed from the first frames; and a receiving apparatus which includes

receiving means for receiving the first image data and the second image data from said transmission apparatus,

decoding means for decoding the image data received by said receiving means,

sorting means for sorting a plurality of frames of the first image data and the second image data received by said receiving means to obtain the string of coded moving image data, and

control means for controlling said decoding means to initiate decoding the first image data when said receiving means receives the first image data, and initiate decoding the string of coded moving image data obtained by said sorting means when said receiving means receives the second image data.

10. A receiving method comprising the steps of:

receiving first image data and second image data from a transmission apparatus which extracts a frame of coded image data from a string of coded moving image data at every predetermined interval to create the first image data, creates the second image data from frames of coded image data other than the extracted frames, and transmits the second image data after transmission of the first image data;

decoding the image data received in said receiving step;

sorting a plurality of frames of the first image data and the second image data received in said receiving step to obtain the string of coded moving image data; and

controlling decoding means to decode the string of coded moving image data obtained in said sorting step.

11. A method according to claim 10, wherein said control step further includes a step of controlling the decoding means to initiate decoding the first image data when the first image data is received in said receiving step.

12. A method according to claim 11, wherein said control step further includes a step of controlling the decoding means to halt decoding processing for the first image data when the second image data is received in said receiving step, and initiate decoding the string of coded moving image data obtained in said sorting step.

13. A method according to claim 12, wherein decoding start timing of the string of coded moving image data is decided in said control step based on the transmission rate of the image data received in said receiving step and the reproduction time of the string of coded moving image data.

14. A method according to claim 10, wherein the string of coded moving image data is coded selectively using intra-frame coding and inter-frame coding such that the first image data is made up of intra-coded image data and the second image data is made up of inter-coded image data.

15. A method according to claim 14, wherein the string of coded moving image data is coded in the MPEG format such that the first image data is formed from I-frames and the second image data is formed from P- and B-frames.

16. A receiving method comprising the steps of:

receiving first image data and second image data from a transmission apparatus which sorts a plurality of frames in a string of coded moving image data formed by multiplexing an intra-picture coded first frame and an inter-picture coded second frame in a predetermined order, and transmits the second image data formed from the second frames after transmission of the first image data formed from the first frames;

decoding the image data received in said receiving step;

sorting a plurality of frames of the first image data and the second image data received in said receiving step to obtain the string of coded moving image data; and

controlling decoding means to initiate decoding the first image data when the first image data is received in said receiving step, and initiate decoding the string of coded moving image data obtained in said sorting step when the second image data is received in said receiving step.

17. A receiving method comprising the steps of:

receiving first image data, second image data, and third image data from a transmission apparatus which sorts a plurality of frames in a string of coded moving image data formed by multiplexing an intra-picture coded first frame, a forward prediction coded second frame, and a bidirectional prediction coded third frame in a predetermined order, and transmits the second image data formed from the second frames after transmission of the first image data formed from the first frames and transmits the third image data formed from the third frames after transmission of the second image data;

decoding the image data received in said receiving step;

sorting a plurality of frames of the first image data, the second image data, and the third image data received in said receiving step to obtain a first string of coded image data formed from the first frames and the second frames and a second string of coded image data formed from the first frames, the second frames, and the third frames; and

controlling decoding means to initiate decoding the first image data when the first image data is received in said receiving step, initiate decoding the first string of coded image data obtained in said sorting step when the second image data is received in said receiving step, and initiate decoding the second string of coded image data obtained in said sorting step when the third image data is received in said receiving step.

18. A transmitting apparatus for transmitting first and second coded image data to a receiving apparatus, said transmitting apparatus having means for extracting frames of coded image data from a string of frames of coded image data at predetermined intervals to create said first image data, and to create the second image data from frames of said string of coded image data other than the extracted frames, the apparatus being adapted to transmit the first image data before the second image data.

19. Apparatus according to claim 18, wherein the first image data comprises frames of inter-frame coded data, and the second image data comprises frames coded by forward predictive coding, and further comprising means for generating third image data from image data coded by bi-directional predictive coding, the transmitting apparatus being adapted to transmit the first, second and third image data in sequence.

## FIG. 1

EP 1 331 823 A2

# FIG. 2

f1 f2 f3 f4 f5 f6 f7 f8 f9 f10 f11 f12

| I | B | P | B | I | B | P | B | I | B | P | B | ～201

f1 f5 f9 f3 f7 f11 f2 f4 f6 f8 f10 f12

| I | I | I | P | P | P | B | B | B | B | B | B | ～202

203    204    205

# FIG. 3

t301

f1 f5 f9 f3 f7 f11 f2 f4 f6 f8 f10 f12

I I I P P P B B B B B B ~301

t302

t303

t304

f1 [I]

f5 [I]

f9 [I] ~302

FOURFOLD SPEED REPRODUCTION

f1 [I]  f3 [P]  f5 [I]

f7 [P]  f9 [I]  f11 [P] ~303

TWOFOLD SPEED REPRODUCTION

f1 [I]  f2 [B]  f3 [P]  f4 [B]  f5 [I]  f6 [B]  f7 [P]  f8 [B]  f9 [I]  f10 [B]  f11 [P]  f12 [B] ~304

NORMAL REPRODUCTION

# FIG. 4

110

112 MOVING IMAGE STORING DEVICE

114 TRANSMISSION APPARATUS

116 SORTING APPARATUS

118 CONTROL APPARATUS

120 WIDE AREA NETWORK

130

132 RECEIVING APPARATUS

134 SORTING APPARATUS

136 TEMPORARY BUFFER

138 DECODING APPARATUS

140 DISPLAY CONTROL APPARATUS

160 MONITOR

142 TRANSMISSION RATE MONITORING APPARATUS

144 HEADER ANALYZING APPARATUS

146 START TIME CALCULATING APPARATUS

148 CONTROL APPARATUS

150

EP 1 331 823 A2

FIG. 5

NORMAL REPRODUCTION

FIG. 6

REFERENCE FRAME
FOR TWOFOLD SPEED
REPRODUCTION

REFERENCE
FRAME FOR
FOURFOLD SPEED
REPRODUCTION

REFERENCE FRAME
FOR NORMAL
REPRODUCTION

FOURFOLD SPEED REPRODUCTION

TWOFOLD SPEED REPRODUCTION

NORMAL REPRODUCTION

# FIG. 7

MOVING IMAGE STORING DEVICE — 712

TRANSMISSION APPARATUS — 714

710

CONTROL APPARATUS — 716

720

WIDE AREA NETWORK

730

RECEIVING APPARATUS — 732

RECEIVED MOVING IMAGE STORING DEVICE — 734

DECODING APPARATUS — 736

DISPLAY CONTROL APPARATUS — 738

MONITOR — 750

CONTROL APPARATUS — 740

742

EP 1 331 823 A2

FIG. 8

810

820

830

812

MOVING IMAGE FOR NORMAL REPRODUCTION

MOVING IMAGE FOR BACKWARD REPRODUCTION

MOVING IMAGE FOR QUICK REPRODUCTION

814

SELECTION APPARATUS

816

TRANSMISSION APPARATUS

WIDE AREA NETWORK

832

RECEIVING APPARATUS

834

TEMPORARY BUFFER

836

DECODING APPARATUS

838

DISPLAY CONTROL APPARATUS

850

MONITOR

818

CONTROL APPARATUS

840

CONTROL APPARATUS

842

17

EP 1 331 823 A2